# EUROPEAN PATENT APPLICATION

(11) **EP 3 726 501 A1**
(43) Date of publication of application: **21.10.2020**
(21) Application number: 20165665.9
(22) Date of filing: 25.03.2020
(51) Int. Cl.: G08G 5/04, G08G 5/00

(54) **SYSTEM AND METHOD FOR HANDLING TERRAIN IN DETECT AND AVOID**

(30) Priority: 18.04.2019 US 201916387741
(71) Applicant: The Boeing Company, Chicago, IL 60606-2016 (US)
(72) Inventor: ESTKOWSKI, Regina Inez, Chicago, Illinois 60606 (US)
(74) Representative: Bugnion S.p.A. - US1

(57) **Abstract**

Object detection and avoidance method comprising receiving time-referenced position and state data for vehicles (402), including a control vehicle (102), within a specified time-space zone (520), wherein the vehicles have initial positions (406) within the specified time-space zone. Terrain data is received for a spatial zone of interest (510) that overlaps the time-space zone (520). A trajectory window (206) is calculated for each vehicle within the time-space zone, as well as spatial buffer zones (T4) around terrain in the spatial zone of interest (510) according to data uncertainty and resolution. A number of homotopically distinct paths (1014, 1016) are calculated for the control vehicle from a time-referenced initial position (1020) to a destination point (1022), wherein the paths keep the control vehicle at least a minimum specified distance from the trajectory windows of other vehicles and the buffer zones of terrain and obstacles. The control vehicle is then routed according to one of the paths.

## Description

### Field

The present disclosure relates generally to routing of vehicles to maintain separation of vehicles and to avoid obstacles. More particularly, the present disclosure relates to the automated integration of terrain and obstacle avoidance in vehicle separation.

### Background

Remain Well Clear is required for the integration of unmanned aircraft systems (UAS) into the National Airspace System (NAS). In particular, terrain and stationary obstacle avoidance while maintaining separation from other vehicle is of major concern for operations at lower altitudes such as operations in urban areas or for infrastructure inspection.

Aircraft and other vehicles in motion may encounter many moving and stationary obstacles. Moving obstacles include other aircraft, flocks of birds, and weather systems. Stationary obstacles include natural objects, such as terrain, and man-made objects, such as towers and buildings. An aircraft moving along its flight path may be required to carry out transitory course modifications due to expected and unexpected obstacles. The operator of the aircraft may seek to execute heading changes that maintain adherence to scheduled arrival time while observing constraints regarding speed, altitude, safety, and passenger comfort.

In addition to other aircraft, the operator of the aircraft might also have to account for terrain and fixed obstacles.

### SUMMARY

An illustrative embodiment provides for a computer-implemented method for object avoidance. The method comprises receiving time-referenced position and state data for vehicles, including a control vehicle, within a specified time-space zone, wherein the vehicles have initial positions within the specified time-space zone. Terrain and obstacle data are received for a spatial zone of interest, wherein a portion of the spatial zone of interest overlaps with a portion of the specified time-space zone. A probabilistic trajectory window is calculated for each vehicle within the specified time-space zone. Spatial buffer zones are calculated around terrain and obstacles in the spatial zone of interest according to terrain and obstacle data uncertainty and resolution. A number of homotopically distinct paths are then calculated for the control vehicle from a time-referenced initial position to a destination point, wherein the paths keep the control vehicle at least a minimum specified distance from the trajectory windows of other vehicles and the buffer zones of terrain and obstacles. The control vehicle is then routed according to one of the paths.

Another illustrative embodiment provides an object avoidance system that comprises a control vehicle and a computer connected to the control vehicle. The computer comprises a bus system, a storage device connected to the bus system, wherein the storage device stores program instructions, and a number of processors connected to the bus system, wherein the number of processors execute the program instructions to: receive time-referenced position and state data for vehicles, including the control vehicle, within a specified time-space zone, wherein the vehicles have initial positions within the specified time-space zone; receive terrain and obstacle data for a spatial zone of interest, wherein a portion of the spatial zone of interest overlaps with a portion of the specified time-space zone; calculate a probabilistic trajectory window for each vehicle within the specified time-space zone; calculate spatial buffer zones around terrain and obstacles in the spatial zone of interest according to terrain and obstacle data uncertainty and resolution; calculate a number of homotopically distinct paths for the control vehicle from a time-referenced initial position to a destination point, wherein the paths keep the control vehicle at least a minimum specified distance from the trajectory windows of other vehicles and the buffer zones of terrain and obstacles; and route the control vehicle according to one of the paths.

Another illustrative embodiment provides a computer program product for object avoidance. The computer program product comprises a non-volatile computer readable storage medium having program instructions embodied therewith, the program instructions executable by a number of processors to cause the computer to perform the steps of: receiving time-referenced position and state data for vehicles, including a control vehicle, within a specified time-space zone, wherein the vehicles have initial positions within the specified time-space zone; receiving terrain and obstacle data for a spatial zone of interest, wherein a portion of the spatial zone of interest overlaps with a portion of the specified time-space zone; calculating a probabilistic trajectory window for each vehicle within the specified time-space zone; calculating spatial buffer zones around terrain and obstacles in the spatial zone of interest according to terrain and obstacle data uncertainty and resolution; calculating a number of homotopically distinct paths for the control vehicle from a time-referenced initial position to a destination point, wherein the paths keep the control vehicle at least a minimum specified distance from the trajectory windows of other vehicles and the buffer zones of terrain and obstacles; and routing the control vehicle according to one of the paths.

The features, functions, and benefits may be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is a block diagram of a system of routing decisions in a separation management system in accordance with illustrative embodiments;
**Figure 2** is a diagram providing a schematic view of safe separation windows for aircraft with varying degrees of uncertainty in accordance with illustrative embodiments;
**Figures 3A** and **3B** are diagrams providing a schematic view of safe separation windows for terrain with varying degrees of uncertainty according to illustrative embodiments;
**Figure 4** is a block diagram depicting a system for terrain handling and detect and avoid (DAA) in accordance with illustrative embodiments;
**Figure 5** is a diagram depicting a VPR coordinate system superimposed on a projection of a space partition coordinate system in accordance with illustrative embodiments;
**Figure 6** depicts a portion of a single resolution space partition in accordance with an illustrative embodiment;
**Figure 7** depicts a multi-resolution space partition in accordance with an illustrative embodiment;
**Figure 8** depicts multiple layers of a 4D VPR in accordance with an illustrative embodiment;
**Figure 9** is a diagram of a virtual predictive radar displaying fat paths in accordance with illustrative embodiments;
**Figure 10** is a diagram of a virtual predictive radar displaying fat paths in combination with terrain data in accordance with an illustrative embodiment;
**Figure 11** is a diagram of a virtual predictive radar displaying altered fat paths to account for terrain data in accordance with an illustrative embodiment;
**Figure 12** is a flowchart depicting a process flow for integrating terrain information into VPR object avoidance in accordance with an illustrative embodiment;
**Figure 13** is a flowchart depicting a process flow for integrating terrain information into VPR fat paths in accordance with an illustrative embodiment;
**Figures 14A** and **14B** are a flowchart illustrating a process for mapping terrain data to a VPR in accordance with illustrative embodiments; and
**Figure 15** is an illustration of a data processing system, in accordance with an illustrative embodiment.

### DETAILED DESCRIPTION

The illustrative embodiments recognize and take into account that terrain and obstacle avoidance while maintaining separation from other vehicles becomes more important for operations at lower altitudes and in particular in the Urban Air Mobility environment.

The illustrative embodiments recognize and take into account the need for a control vehicle, for example an aircraft, to be provided navigation and heading information in advance of reaching decision points.

The illustrative embodiments recognize and take into account that along an aircraft flight path, objects of interest may lie between the aircraft and points ahead of the aircraft along an intended flight path of the aircraft.

An aircraft may follow at least one homotopically distinct region of travel, referred to herein as a "fat path." A plurality of fat paths may be calculated between a time-referenced initial position of an aircraft and destination point based on maneuvering characteristics of the aircraft and a probabilistic zone of interest for other aircraft. A separation management system receives and filters aircraft and airspace information about a control aircraft and other aircraft the control aircraft seeks to avoid. Trajectory windows for each aircraft can be determined and monitored with respect to time and probable location. The separation management system determines when trajectory overlap might occur and can reroute the control vehicle.

A virtual predictive radar (VPR) screen can display a plurality of trajectory paths for a control vehicle and can include time rings predicting the location of the control vehicle in three-dimensional space plus time. Based on maneuverability characteristics and speed of the control vehicle, constraints may be placed on the control vehicle. When a second vehicle is predicted to intersect the VPR, multiple fat paths can be generated along a subset of the trajectory paths to maintain separation of the control vehicle from the second vehicle.

Homotopically distinct regions of travel (fat paths), separation management systems, virtual predictive radar, and their supporting methods and systems are described in further detail in "Automated Separation Manager", U.S. Patent No. 8,060,295 dated November 15, 2011.

The illustrative embodiments recognize and take into account that methods of calculating fat paths for aircraft take into account other aircraft within time-referenced airspace around the control aircraft but do not address handling terrain and ground obstacles in generating routing options.

The illustrative embodiments recognize and take into account that a VPR Maneuver Manifold provides a control vehicle centric representation of traffic information in terms of location relative to the control vehicle, whereas terrain data is typically represented in a global manner such as elevation at latitude, longitude grid points. Therefore, methods that integrate the terrain and vehicle information that may be represented in dissimilar coordinates or maintained in dissimilar data structures are needed in providing simultaneous separation from terrain, obstacles and traffic.

The illustrative embodiments provide a method and system for the inclusion of terrain and obstacle consideration in the VPR data structure for separation management and object avoidance. Terrain data is maintained in a space partition data structure, such as an octree or a rectangular 3D grid-like structure, which is mapped to the VPR data structure. The Maneuver Manifold is also mapped into the terrain representation, and locations where the terrain intersects the maneuver manifold are determined.

The illustrative embodiments provide an automated separation system that maintains a maneuver manifold in the form of a VPR for a control vehicle that continually monitors relevant traffic location in a space-time zone, representing the traffic in the VPR. The separation management system includes an octree module to maintain terrain and obstacle information in a space partition data structure, the extent of which encompasses the space-time zone. The separation management system maps the VPR into the space partition containing terrain and obstacle information, thereby encoding the terrain and obstacle locations in the VPR along with traffic information. The separation management system generates a plurality of fat-paths in the VPR that avoids traffic, terrain, and obstacles such as buildings or towers.

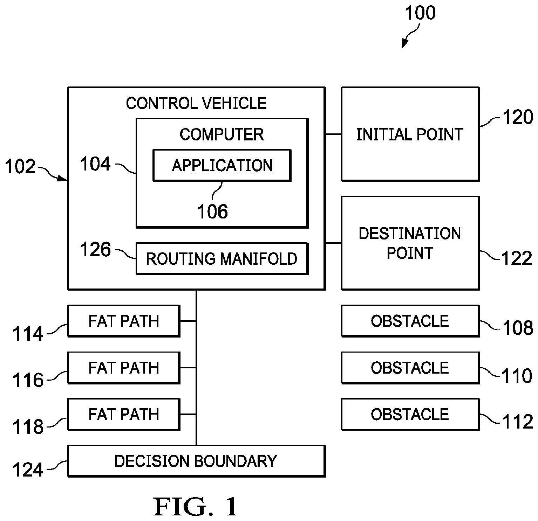

Attention is now turned to the figures. **Figure 1** is an illustration of a block diagram of a system **100** of routing decisions in a separation management system. System **100** includes control vehicle **102,** computer **104,** application **106,** obstacle **108,** obstacle **110,** obstacle **112,** fat path **114,** fat path **116,** fat path **118,** initial position **120,** destination point **122,** decision boundary **124,** and routing manifold **126.**

Control vehicle **102** can be an aircraft including fixed wing airplane, helicopter, glider, balloon, blimp, or unmanned aircraft. Control vehicle **102** can also be watercraft including a ship or submarine. Control vehicle **102** can also be a land-based vehicle.

Computer **104** can be a general-purpose computer. Computer **104** can be situated aboard control vehicle **102.** Computer **104** can also be situated at a ground location, for example at an air traffic control center. Computer **104** can be multiple computers working together towards a goal, including computers in different physical locations.

Application **106** executes on computer **104** and can execute the actions provided herein regarding setting boundaries in time and space in which operators of control vehicle **102** make decisions regarding headings. In an embodiment, portions of application **106** can execute on more than one computer **104** that may be situated at more than one location or aboard more than one aircraft or other vehicle.

Obstacle **108,** obstacle **110,** and obstacle **112** may include aircraft, balloons, gliders, unmanned aerial vehicles that may be stationary or in motion. Obstacle **108,** obstacle **110,** obstacle **112** can also include flocks of birds, weather systems, and any other object either stationary or in motion that control vehicle **102** desires to avoid. Obstacle **108,** obstacle **110,** and obstacle **112** can also be ground-based and be a natural object such as terrain comprising mountain ranges for example, or may be man-made, for example a communications tower, a building, or a no-fly zone. In maritime embodiments, obstacle **108,** obstacle **110,** and obstacle **112** can be other ships, submarines, buoys, terrain, both submerged or not, and weather systems.

Fat path **114,** fat path **116,** and fat path **118** are homotopically distinct regions of travel. Fat path **114,** fat path **116,** and fat path **118** can be calculated between a time referenced position of control vehicle **102** and a reference point based on maneuvering characteristics of control vehicle **102** and a probabilistic zone of interest for obstacle **108,** obstacle **110,** and obstacle **112** including other aircraft. Fat path **114,** fat path **116,** and fat path **118** comprise a maximal simply connected region contained in routing (maneuver) manifold **126** wherein for each point in the region there exists a feasible route for control vehicle **102** that contains the point, that begins at time-referenced initial position **120** and ends at destination point **122.** A route for control vehicle **102** is feasible if the route satisfies scheduling requirements and constraints and is physically possible.

Initial position **120,** destination point **122,** and routing manifold **126** can form a union of possible paths in space and time from a start state to an end state that satisfy maneuver and operational constraints for control vehicle **102** and avoid obstacles **108-112.** Maneuver and operational constraints can include speed, altitude, safety, and passenger comfort.

Decision boundary **124** is a simply connected set of points in at least one of time and space. In order to maintain a feasible path, upon reaching a point along decision boundary **124,** control vehicle **102** must be either on a path that transitions to a fork option including one or more of fat path **114,** fat path **116,** and fat path **118** or initiate a change of heading onto a different fat path that transitions to one of fat path **114,** fat path **116,** and fat path **118.** It should be noted that the illustrative embodiments can implemented without a decision boundary. A choice of fat path can be made at time 0 with no intention of switching to another fat path, thereby obviating the need for decision boundary **124.**

The illustrative embodiments shown in **Figure 1** are not meant to imply physical or architectural limitations to the manner in which different illustrative embodiments may be implemented. Other components in addition to and/or in place of the ones illustrated may be used. Some components may be unnecessary in some illustrative embodiments. Also, the blocks are presented to illustrate some functional components. One or more of these blocks may be combined and/or divided into different blocks when implemented in different illustrative embodiments.

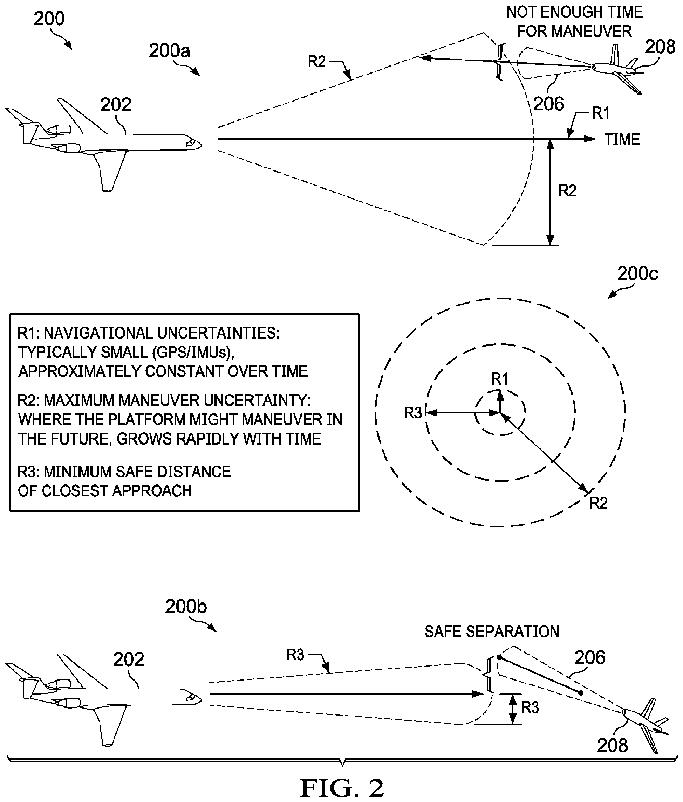

**Figure 2** is a diagram providing a schematic view of safe separation windows for aircraft with varying degrees of uncertainty according to illustrative embodiments. **Figure 2** is provided for illustration purposes and depicts uncertainties to be considered in a separation management system upon which the systems and methods of the present disclosure can be based. Components shown in **Figure 2** are indexed to components shown in **Figure 1****.** Control aircraft **202** shown in **Figure 2** corresponds to control vehicle **102** shown in **Figure 1****.** Reference aircraft **208** shown in **Figure 2** corresponds to obstacle **108** shown in **Figure 1****.** **Figure 2** is a schematic view showing safe separation windows for aircraft with varying degrees of uncertainty.

**Figure 2** depicts two separate scenarios, labeled as **200a** and **200b.** Control aircraft **202** and reference aircraft **208** each have a trajectory window (probabilistic position zone). The control aircraft **202** has a trajectory window **R1** that represents the navigational uncertainty from a planned trajectory path. The trajectory window **R1** can result from environmental conditions (e.g., wind, air mass, etc.) instrumentation limitations and/or tolerances, or other factors influencing aircraft trajectory. The navigational uncertainties represented by the subset trajectory window **R1** are typically small and may be assumed to be approximately constant over time. A second trajectory window **R2** for control aircraft **202** is defined by the possible trajectories of the control aircraft **202** as a function of time, where the radius **of R2** represents distance from a straight path. For example, a maneuverable aircraft might have a very large **R2** because the aircraft can be able to execute a sharp maneuver in a relatively short distance whereas a less maneuverable aircraft may have a narrower **R2** value. Generally speaking, **R2** values define the maximum maneuvering uncertainty for an aircraft, and the **R2** area characteristically grows rapidly with time.

The reference aircraft **208** also has a trajectory window **206** that defines its probable trajectories and position as a function of time.

Scenario **200a** depicts an undesirable situation for control aircraft **202** because trajectory window **R2** for control aircraft **202** is too broad such that it does not provide enough room for maneuver to avoid intersection of the respective trajectory windows **R2** and **206.** Under such conditions, the control aircraft **202** and the reference aircraft **208** might be at a high risk for interference.

The illustrative embodiments reduce the trajectory window control aircraft **202** thereby enlarging the potential separation zones between the control aircraft **202** and the reference aircraft **208.**

Scenario **200b** depicts conditions of safe separation for control aircraft **202** because trajectory window **R3** is narrower such that control aircraft **202** and reference aircraft **208** will safely pass. Illustrative embodiments use probability curves to reduce the trajectory window **R2** to a minimum safe distance trajectory window **R3** illustrated in a scenario **200b.** For example, trajectory window **R3** might represent a ninety-eight percent confidence interval for the trajectory of the control aircraft **202.** In contrast to scenario **200a,** scenario **200b** does not include an intersection of the trajectory window **R3** of the control aircraft **202** and trajectory window **206** of the reference aircraft **208,** thereby creating a safe separation distance between the two aircraft. The illustrative embodiments use a trajectory window **R3** for relevant aircraft when implementing the separation manager to control the airspace.

The different trajectory windows **R1, R2,** and **R3** are further described in section **200c** of **Figure 2****.** As mentioned above, **R1** represents small navigational uncertainties typically resulting from environmental conditions, instrumentation limitations and/or tolerances and is approximately constant over time. **R2** reflects maximum maneuver uncertainty, representing a look-forward area where the vehicle might maneuver in the future and grows rapidly with project time. **R3** represents a minimum safe distance of closest approach. One skilled in the art will appreciate the radius of **R1, R2,** and **R3** may greatly differ from section **200c,** although the general relationship of **R2** being greater than **R3** is consistent.

Referring back to **Figure 1****,** routing manifold **126** can contain information about regions of uncertainty for pilots, ground control personnel and others, and can also contain information about trajectory windows (e.g., **R2, R3**) for control vehicle **102** of **Figure 1** and obstacle **108.** System **100** also includes decision boundary **124** which provides a simply connected set of points, whereon being reached, operator of control vehicle **102** must make decisions regarding heading while still observing prior established constraints which may include information about regions of uncertainty and trajectory windows.

A virtual predictive radar (VPR) is a data structure that represents a maneuver/routing manifold taking into account the trajectory windows of other aircraft within a look-ahead/time-space zone in front of the control aircraft, as well as the maneuver constraints of the control aircraft.

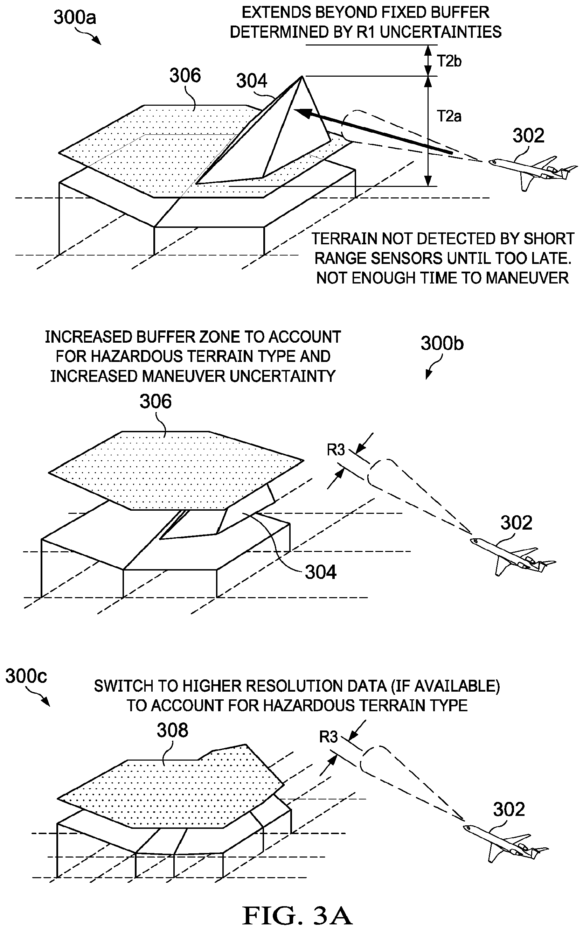

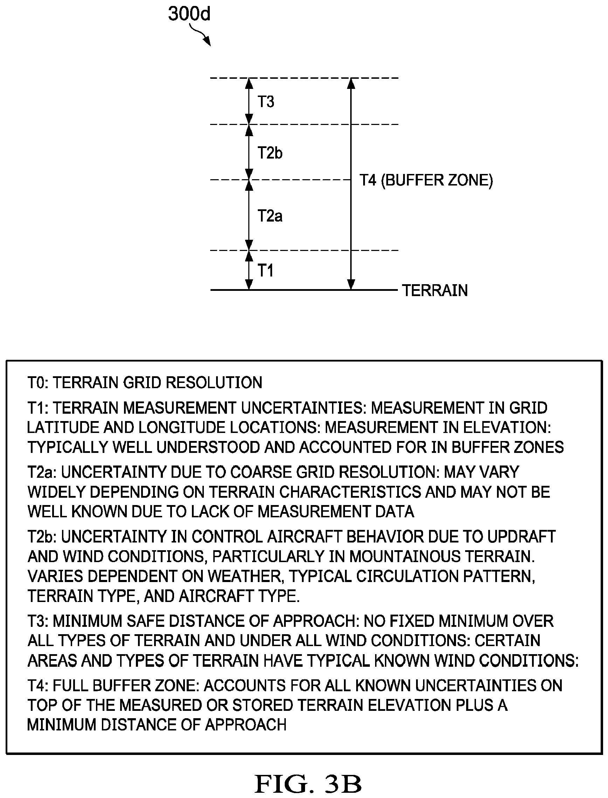

**Figures 3A** and **3B** are diagrams providing a schematic view of safe separation windows for terrain with varying degrees of uncertainty according to illustrative embodiments. **Figures 3A** and **3B** are provided for illustration purposes and depicts uncertainties to be considered in a terrain avoidance system upon which the systems and methods of the present disclosure can be based. Components shown in **Figures 3A** and **3B** are indexed to components shown in **Figure 1****.** Control aircraft **302** shown in **Figure 2** corresponds to control vehicle **102** shown in **Figure 1****.** Terrain feature **304** shown in **Figure 3A** corresponds to obstacle **108** shown in **Figure 1****.** **Figures 3A** and **3B** are a schematic view showing safe separation windows for terrain with varying degrees of uncertainty.

**Figures 3A** and **3B** depict three separate scenarios, labeled as **300a, 300b,** and **300c.** Maneuver of control aircraft **302** needs to account for **T1,** which represents terrain measurement uncertainties. Terrain measurement represents grid latitude and longitude locations, and elevation. **T1** is typically well understood and accounted for in buffer zone **306.**

Maneuver of control aircraft **302** also needs to account for **T2a** extending beyond the buffer determined by T1 uncertainties. **T2a** represents uncertainty due to coarse resolution of terrain data and may vary widely depending on terrain characteristics and may not be well known due to lack of measurement data. Terrain feature **304** represents terrain elevation at a spot for which measurement data is not provided due to coarse measurement resolution.

Control aircraft **302** has a trajectory uncertainty **T2b** that accounts for uncertainty in behavior of control aircraft **302** due to updraft and wind conditions, particularly in mountainous terrain and varies dependent on weather, typical circulation pattern, terrain type, and aircraft type.

The scenario shown in **300a** entails the risk that terrain feature **304** is not detected by short range sensors until it is too late for control aircraft **302** to maneuver to avoid it, analogous to reference aircraft **208** in scenario **200a** in **Figure 2****.**

In scenario **300b,** trajectory path **R3** establishes a minimum safe distance of approach to the buffer zone **306.** There is no fixed minimum over all types of terrain under all wind conditions. Certain areas and types of terrain have typical known wind conditions. In Scenario **300b,** the buffer zone **306** is increased to account for known wind conditions and terrain types.

In scenario **300c,** control aircraft **302** switches to a higher terrain resolution **308,** if it is available, to account for hazardous terrain types. The buffer zone is reduced due to increased terrain data resolution but still accounts for wind conditions.

Section **300d** of **Figure 3B** describes a full buffer zone **T4** comprised of uncertainties **T1, T2a, T2b** associated with terrain along with a minimum safe distance of approach **T3** given the terrain type and wind conditions. Scenarios **300b** and **300c** depict partial buffer zones that do not include **T3.** It should be understood that the trajectory path **R3** at a minimum encompasses **T3.**

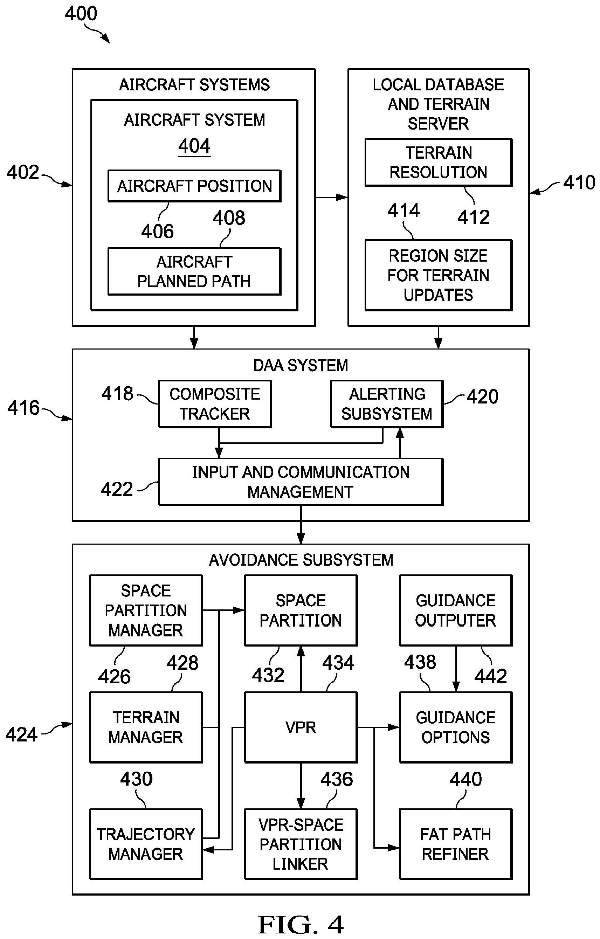

**Figure 4** is a block diagram depicting a system for terrain handling and detect and avoid (DAA) in accordance with illustrative embodiments. System **400** integrates information about aircraft and terrain data within a look-ahead region of a control vehicle. Each aircraft system **404** among aircraft systems **402** has a position **406** and planned path **408,** which are available for access by multiple systems.

A local database and/or terrain server **410** provide terrain data and updates given current location, planned path, and parameter-defined local region for updates. An on-board terrain and obstacle database can be included in order to speed up access to terrain and obstacle data. A remote terrain server in communication with the DAA system can also be used in place of or in combination with an onboard database.

Terrain parameters include terrain resolution **412** and regions size for terrain updates **414.** Terrain parameters can be updated in real-time or fixed depending on operational need and implementation. The region size for updates **414** is dependent on a specified look-ahead region for terrain, which might be larger than that for intruders (i.e. other vehicles). The look-ahead region depends on ownership speed, allowed deviations from plan, avoidance time frame, and buffer zone beyond the avoidance time frame.

The aircraft and terrain data are fed to DAA system **416,** which comprises composite tracker **418,** alerting system **420,** and input and communications management **422.** Input and communications management **422** provides an avoidance subsystem **424** with information related to ownership state, flight plan, terrain, alerts, predicted trajectories and collision avoidance.

Space partition manager **426** maintains space partition parameters. The terrain manager **428** maintains terrain information in the space partition **432.** In case of a multi-resolution partition, the terrain manager **428** can decimate or refine received terrain data for representation at various resolutions to be compatible with the resolution of a maneuver manifold of the control vehicles. This can also occur in the case of a single resolution partition in which the received terrain data does not match the partition resolution. The terrain manager **428** also maintains auxiliary data structures, acting as an elevation sorter.

Trajectory manager **430** maintains ownership and intruder predicted trajectories and updates the space partition **432** with predicted trajectories if predicted trajectories are maintain in the partition.

Space partition **432** is a data structure used for efficient representation, maintenance, and access of information where location in a spatial construct is relevant. Space partitions can be used to maintain information on airspace traffic, which is particularly useful in areas of high traffic.

Space partition **432** represents space partition cells, information associated with each partition cell, partition parameters, and structures for efficient partition search, which is often a tree structure. Space partition **432** is used to maintain relevant terrain data and to map the terrain data to the VPR **434.**

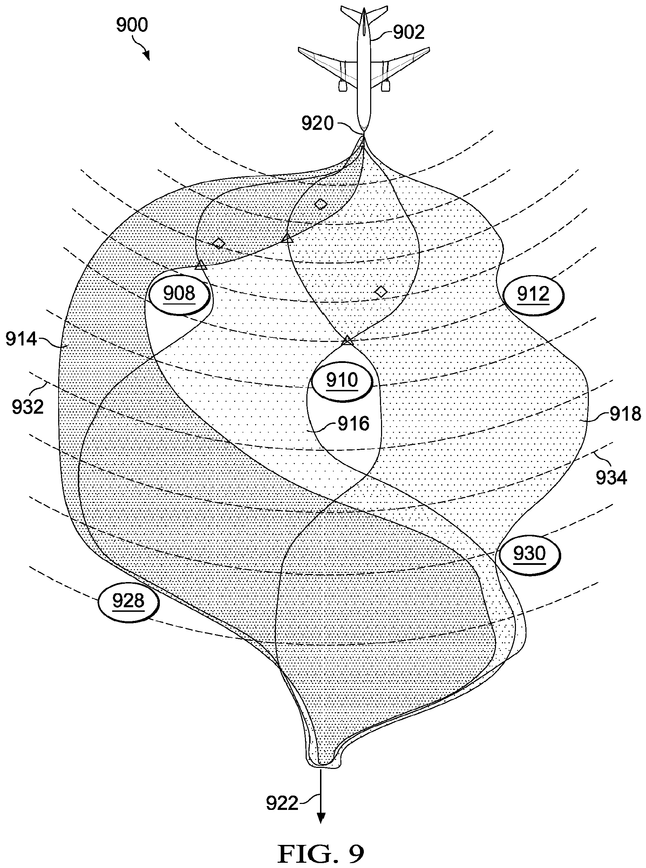

VPR **434** generates VPR data given the ownership predicted trajectory of the control aircraft and represents intruders in the VPR intruded predicted trajectories. From this data, the VPR generates avoidance fat paths, such as pat paths **914, 916, 918** shown in **Figure 9****.**

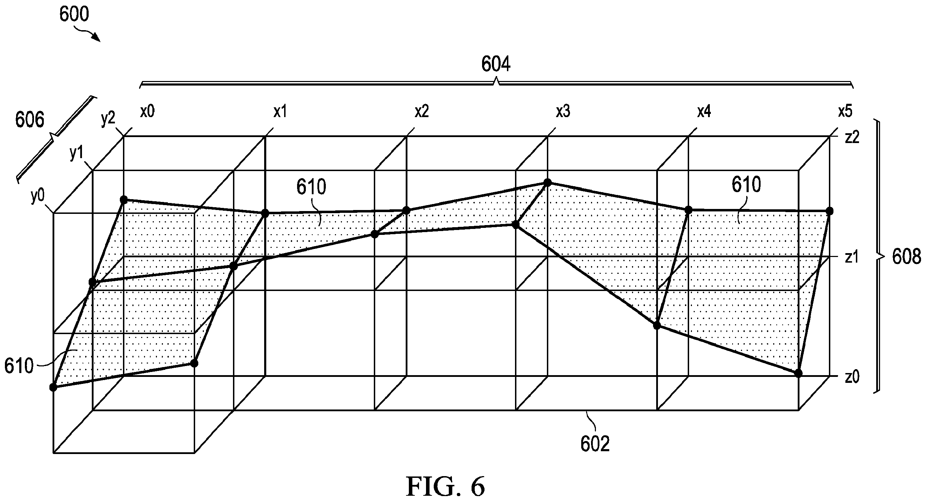

VPR-space partition linker **436** provide the ability to map the space partition **432** into the VPR **434** and vice versa. The VPR **434** provides an ownership-centric representation of airspace in the form of azimuth, range, elevation, and time. The space partition **432** is typically a rectangular representation of terrain based on latitude, longitude, and altitude, as shown for example in **Figure 6****.** Therefore, the VPR **434** and space partition **432** have different data structures with different coordinate systems. The VPR-space partition linker **436** can map VPR cells into space partition cells or map VPR fat path cells into space partition cells and the elevator sorter.

Fat path refiner **440** refines fat paths given terrain and obstacle data and metrics information and can calculate new fat paths in response to either changes in position and state data of other vehicles or changes in terrain and obstacle data. Guidance options **438** convert fat path information, including rerouting options, into representation for output as well as other representation such as waypoint options/bands. Guidance outputer **442** places the guidance information into the required output format.

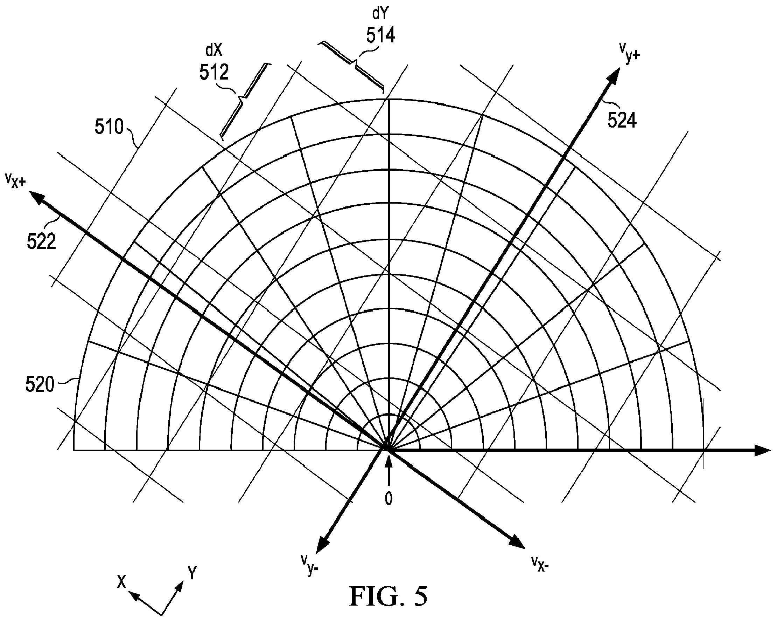

**Figure 5** is a diagram depicting a VPR coordinate system superimposed on a projection of a space partition coordinate system in accordance with illustrative embodiments. Specifically, **Figure 5** illustrates one layer of the VPR coordinate system superimposed over the projected space partition wherein the Z coordinate is constant.

The VPR **520** represents a time-space zone ahead of the control aircraft. The space partition **510** represents a spatial zone of interest that at least partially overlaps with the time-space zone. The portions of the spatial zone of interest and time-space zone that overlap with each other might comprise only sub-sections of each respective zone or the entire zones.

As can be seen in **Figure 5****,** the space partition **510** takes the form of a rectangular grid in an X-Y plane in this view. Cells in the space partition are defined by a X dimension **512** and a Y dimension **514.** The VPR **520** takes the form of a radial grid originating from an initial 0-point, which also represents the position of the control aircraft. The *v_{X}* direction vector **522** is located at 0 and points parallel to the X direction of the space partition **510.** Similarly, the *v_{Y}* direction vector **524** is located at 0 and points parallel to the X direction of the space partition **510.**

It should be noted that **Figure 5** depicts a single plane of both the space partition **510** and VPR **520** for ease of illustration. Both the space partition **510** and VPR **520** can comprise multiple layers along the Z axis as explained below.

**Figure 6** depicts a portion of a single resolution space partition in accordance with an illustrative embodiment. Space partition **600** is represented as a rectangular 3D grid-like structure comprising a plurality of cells **602.** The cells **602** are defined by respective coordinates along the X **604,** Y **606,** and Z **608** axes, enabling representation of terrain features **610** in three dimensions within the cells as shown. Terrain data can be provided to the DAA system in a triangulated format in the form of elevation values at regularly-spaced, latitude and longitude X-Y grid points.

The example space partition **600** depicted in **Figure 6** is single resolution wherein only a single size of cell is employed.

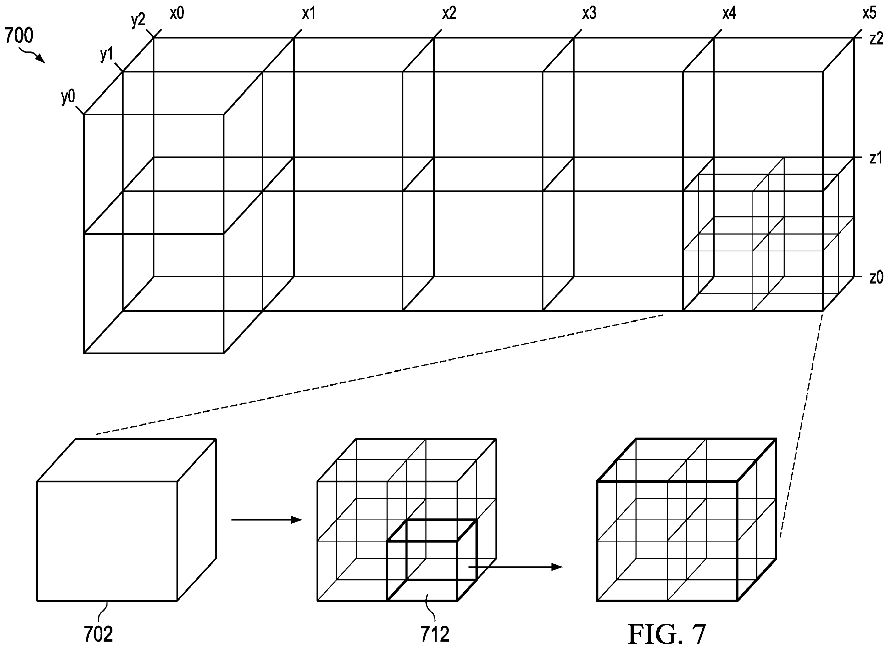

**Figure 7** depicts a portion of a multi-resolution space partition in accordance with an illustrative embodiment. In this example, space partition **700** is represented as an octree in which each cell **702** has eight child cells **712.** The parent cells **702** and child cells **712** represent different levels of resolution. As explained below, the degree of terrain data resolution can affect the manner in which it is combined with VPR data.

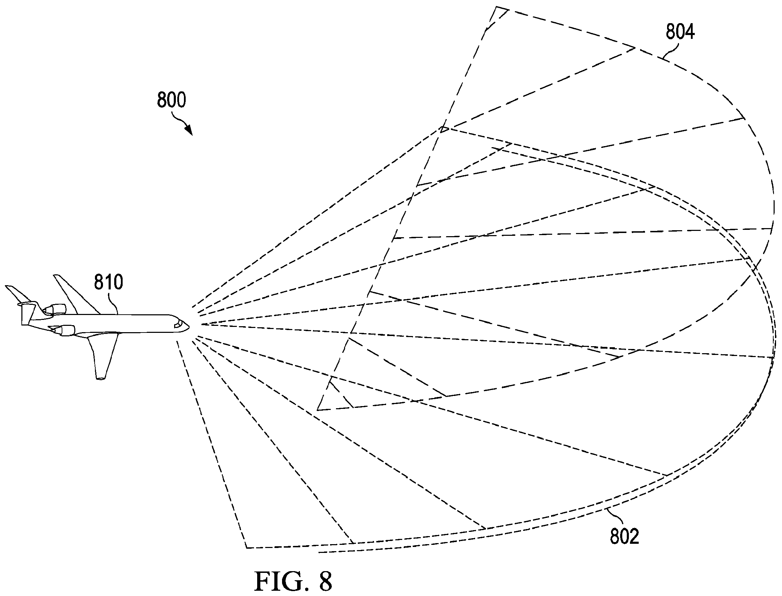

**Figure 8** depicts multiple layers of a four-dimensional (4D) VPR in accordance with an illustrative embodiment. **Figure 8** is a simplified representation for ease of illustration. In this view, 4D VPR **800** comprises two VPR layers **802** and **804.** As shown, aircraft **810** is currently traveling at an altitude represented by VPR layer **802.** As can be seen in **Figure 8****,** VPR layer **804** is truncated in comparison to VPR layer **802.** This truncation accounts for the horizontal distance aircraft **810** has to cover while climbing to reach the altitude of VPR layer **804.**

The illustrative embodiments map the data structures of the space partition and VPR to each other and look for intersections between the data structures. The fat paths represented in the VPR can be optimized or altered according to the presence of terrain features.

**Figure 9** is a diagram of a virtual predictive radar displaying fat paths in accordance with illustrative embodiments. Components shown in **Figure 9** are indexed to components shown in **Figure 1****.** Control vehicle **902** shown in **Figure 9** corresponds to control vehicle **102** shown in **Figure 1****.** Obstacle **908,** obstacle **910,** obstacle **912** shown in **Figure 9** correspond to obstacle **108,** obstacle **110,** obstacle **112** shown in **Figure 1****.** Fat path **914,** fat path **916,** fat path **918** shown in **Figure 9** correspond to fat path **114,** fat path **116,** fat path **118** shown in **Figure 1****.** Initial origination point **920** and destination point **922** shown in **Figure 9** correspond to time-referenced initial position **120** and destination point **122,** respectively, shown in **Figure 1****.** **Figure 9** also depicts several components that do not correspond to components depicted in **Figure 1****.** **Figure 9** depicts two additional obstacles, obstacle **928** and obstacle **930.**

4D-VPR **900** also includes time rings, two of which are labeled for discussion purposes, time ring **932** and time ring **934.** While depicted in **Figure 9** as a ring, time ring **932** and time ring **934** might not be shaped in a ring-like fashion and can take on various shapes. Probabilities of vehicle arrival at a particular point at a particular time may also be associated with at least one of time ring **932** and time ring **934.** Time rings **932, 934** can assume various dimensions in order to reflect uncertainty of location of control vehicle **902** at a given time. Time rings **932, 934** are not components of a system or method per se, but are rather representations of boundaries in time. As control vehicle **902** departs from initial origination point **920** and moves in the direction of destination point **922,** control vehicle **902** crosses boundaries that may be set by application **106** of **Figure 1****,** including time ring **932** and time ring **934.** Time rings **932, 934** can be used in calculating a time until control vehicle **902** would be expected to reach a divergence point of any combination of fat path **914,** fat path **916,** and fat path **918.** Time rings **932, 934** are also useful in determining positions of obstacles **908, 910, 912,** particularly if the obstacles are in motion.

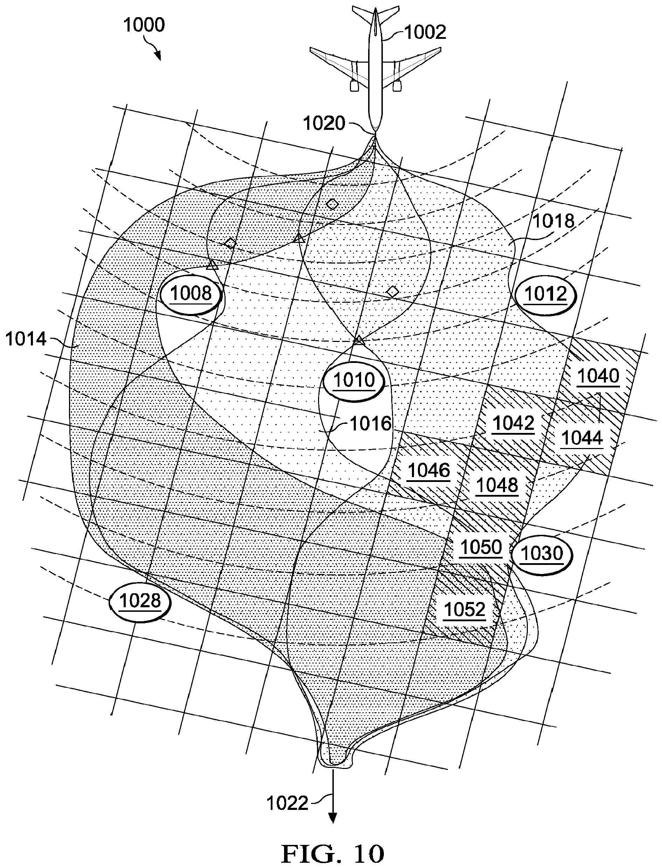

**Figure 10** is a diagram of a virtual predictive radar displaying fat paths in combination with terrain data in accordance with an illustrative embodiment. Similar to 4D-VPR **900** in **Figure 9****,** 4D-VPR **1000** includes three fat paths **1014, 1016,** and **1018** that avoid obstacles **1008, 1010, 1012, 1028,** and **1030,** which are aircraft. 4D-VPR **1000** also incorporates terrain data which indicates that terrain features intersect the maneuver manifold in cells **1040, 1042, 1044, 1046, 1048, 1050,** and **1052.**

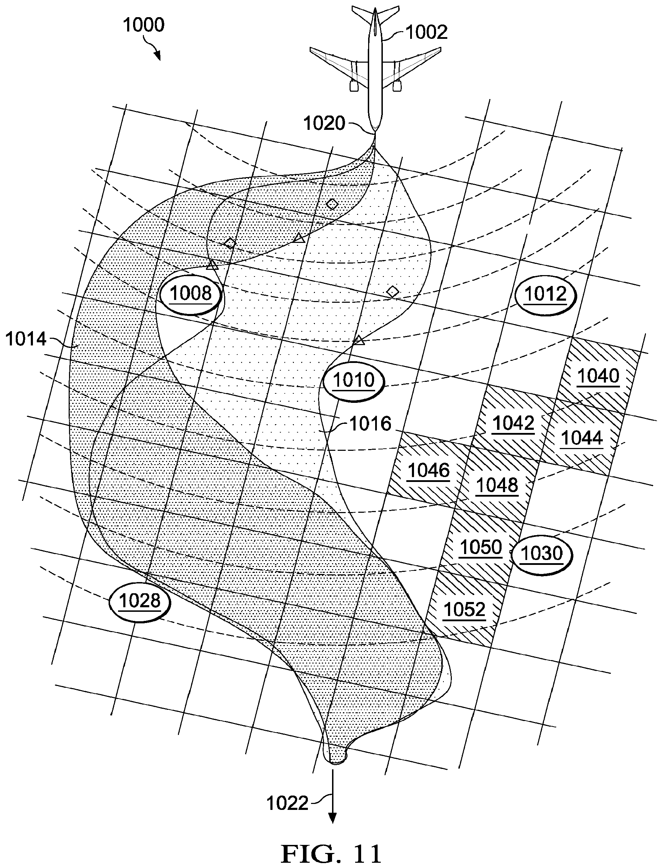

Referring to **Figure 11****,** fat path **1018** has been removed from 4D-VPR **1000** as a result of the presence of terrain obstacles identified in cells **1040-1052,** leaving fat paths **1014** and **1016** as the only remaining fat paths for control aircraft **1002** to avoid both the aircraft and terrain obstacles between time-reference initial position **1020** and destination point **1022.**

In an illustrative embodiment, the terrain data is mapped to the VPR before calculating the fat paths for the control aircraft. In another illustrative embodiment, the fat paths for the control aircraft are calculated before mapping the terrain data to the VPR and then altered as necessary according to the terrain data. This latter embodiment is more appropriate when the terrain data has a higher resolution than the VPR, in order to reduce processing load.

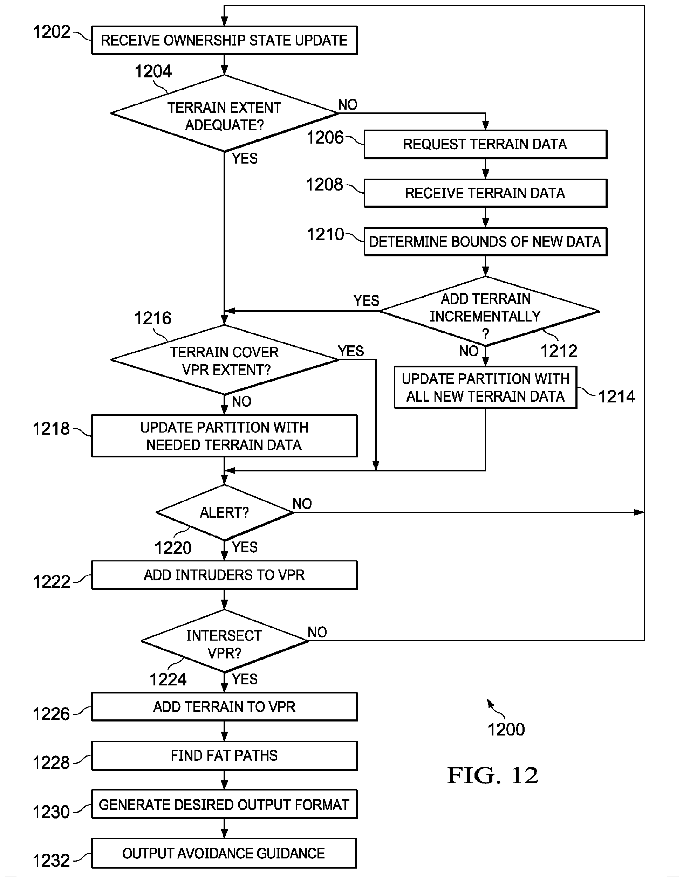

**Figure 12** is a flowchart depicting a process flow for integrating terrain information into VPR object avoidance in accordance with an illustrative embodiment. Process **1200** can be implemented by avoidance subsystem **424** shown in **Figure 4****.** In process **1200,** the terrain data is added to the VPR prior to finding fat paths. This approach is suited for situations in which the terrain data has a lower resolution.

Process **1200** begins by receiving an ownership state update for a control aircraft (step **1202**). This can include location and flight plan update, if any. The avoidance subsystem determines if the current terrain extent is adequate (step **1204**). If the terrain extent is not adequate, the avoidance system requests terrain information, indicating the extent desired (step **1206**). The terrain information is received (step **1208**), and the system determines the bounds of new data (step **1210**). This might be required in the terrain server provides only predetermined chunks of information, which might include both current and new data.

The system then determines if the mode is set to add terrain information incrementally (step **1212**). If the mode is not set to add terrain incrementally, the space partition is updated with all of the new terrain data (step **1214**).

If the mode is set to add terrain incrementally, the system then determines if the current partition terrain information cover the potential VPR extent (step **1216**). If the terrain information does not cover the VPR extent, the partition is updated with the needed terrain data (step **1218**).

The system then determines if there is an intruder alert (step **1220**). If there is no intruder alert, the process returns to step **1202** to receive updated ownership state data.

If there is an alert, the system adds the intruders to the VPR (step **1222**) and determines if there are intruders that intersect the VPR according to their respective probabilistic trajectory windows (step **1224**). If none of the intruders intersect the VPR, the process returns to step **1202.**

If intruders intersect the VPR, the avoidance subsystem adds terrain data to the VPR (step **1226**). This can be done by mapping space partition cell rows to the VPR as explained in more detail below.

After the terrain data is mapped to the VPR, the avoidance system finds fat paths in the VPR that avoids both intruders and terrain features in the terrain data (step **1228**). This is accomplished according to the probabilistic trajectory windows for other aircraft, spatial buffer zones calculated around terrain features and obstacles (based on data uncertainty and resolution), and control vehicle maneuver capabilities and constraints. The fat paths keep the control vehicle at least a minimum specified distance from the trajectory windows of other vehicles and the buffer zones of terrain and obstacles.

After the fat paths are determined the desired output format is generated from the fat path information (step **1230**), and the avoidance guidance is output (step **1232**).

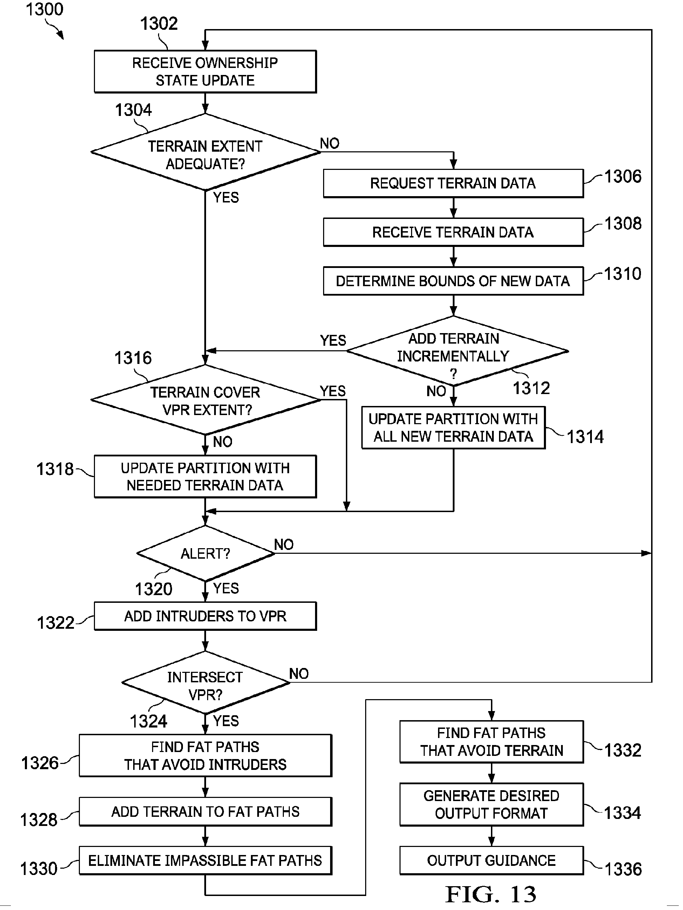

**Figure 13** is a flowchart depicting a process flow for integrating terrain information into VPR fat paths in accordance with an illustrative embodiment. Process **1300** differs from process **1200** in that the fat paths are determined first and then refined as needed to accommodate terrain data. Process **1300** is suited for situations if the terrain is high resolution in order to reduce processing load. This procedure is preferable if the VPR partition is much courser than the terrain partition.

Process **1300** begins by receiving an ownership state update for a control aircraft (step **1302**). This can include location and flight plan update, if any. The avoidance subsystem determines if the current terrain extent is adequate (step **1304**). If the terrain extent is not adequate, the avoidance system requests terrain information, indicating the extent desired (step **1306**). The terrain information is received (step **1308**), and the system determines the bounds of new data (step **1310**). This might be required in the terrain server provides only predetermined chunks of information, which might include both current and new data.

The system then determines if the mode is set to add terrain information incrementally (step **1312**). If the mode is not set to add terrain incrementally, the space partition is updated with all of the new terrain data (step **1314**).

If the mode is set to add terrain incrementally, the system then determines if the current partition terrain information cover the potential VPR extent (step **1316**). If the terrain information does not cover the VPR extent, the partition is updated with the needed terrain data (step **1318**).

The system then determines if there is an intruder alert (step **1320**). If there is no intruder alert, the process returns to step **1302** to receive updated ownership state data.

If there is an alert, the system adds the intruders to the VPR (step **1322**) and determines if there are intruders that intersect the VPR (step **1324**). If none of the intruders intersect the VPR, the process returns to step **1302.**

If there are intruders that intersect the VPR the avoidance subsystem first finds fat paths in the VPR that avoid intruders (step **1326**). After the fat paths are determined, the system adds terrain data to the fat paths (step **1328**). This can be done by mapping the VPR cells to the space partition.

If a path is blocked by terrain at any stage, the system marks it as impassible and moves to the next path (step **1330**). The system finds fat paths that avoid terrain within the existing fat paths (step **1332**). After the passible fat paths are determined the desired output format is generated from the fat path information (step **1330**), and the avoidance guidance is output (step **1336**).

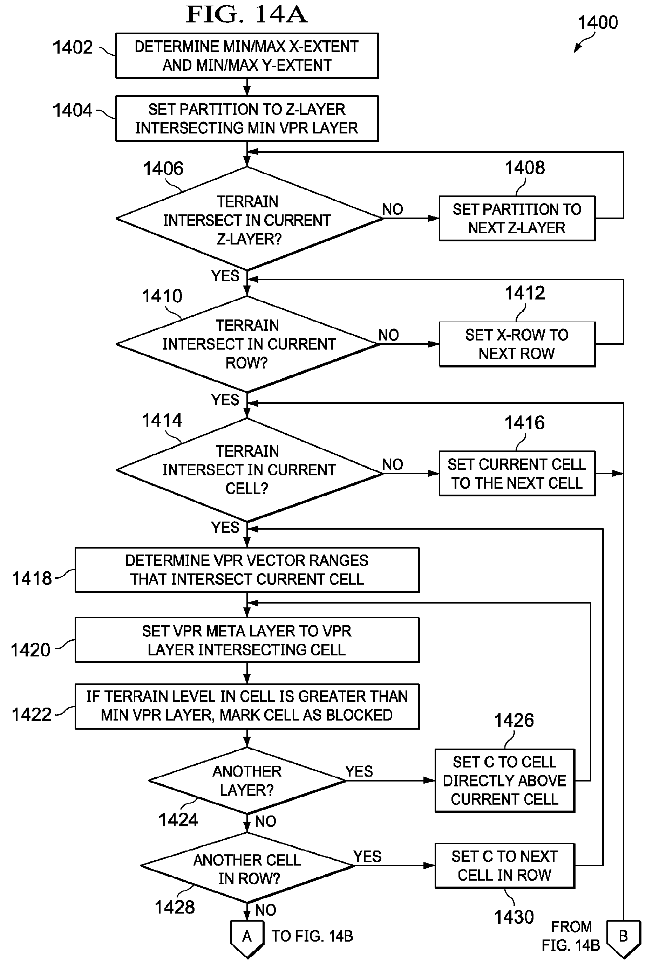

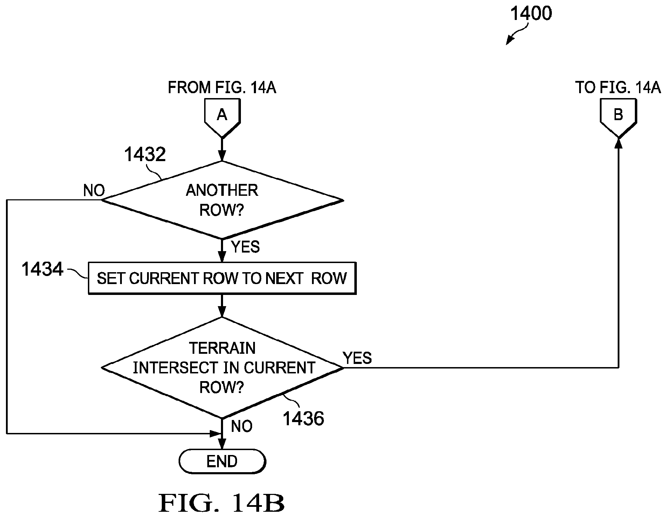

**Figures 14A** and **14B** are a flowchart illustrating a process for mapping terrain data to a VPR in accordance with illustrative embodiments. Process **1400** maps the terrain data to the VPR and vice versa by finding intersections between the respective data structures. Process **1400** begins by determining the min/max of the X-extent and min/max of the Y-extent in the space partition, which defines the extent of the space partition included in the look-forward region in ahead of the control aircraft (step **1402**). Process **1400** can proceed using either the X-rows or Y-rows in the partition. The present example assumes use of the X-rows.

Next the partition current Z-layer value is set to the layer intersection the min VPR layer (step **1404**), and a determination is made if there is a possible terrain intersection in the current Z-layer (step **1406**). If there is no possible intersection, the process sets the current Z-layer value to the next Z-layer (step **1408**) and checked for terrain intersection.

If there is a possible terrain intersection in a current Z-layer, the process sets the current X-row value to the row intersection the min Y-extent and determines if there is a possible terrain intersection in the current row (step **1410**). If there is no intersection, the current X-row value is set to the next row (step **1412**), and again checked for a possible terrain intersection.

If a possible terrain intersection is found with the current X-row, the process then sets the current cell value C to the row-cell intersecting the min X-extent in that Z-layer and determines if there is a possible terrain intersection with that cell (step **1414**). If no intersection is found, C is set to the next cell in the X-row (step **1416**), which is then checked for terrain intersection.

If a possible terrain intersection is detected for the current cell C, the process then determines the VPR vector ranges (defined by range R and angle *θ*) that intersect the current X-Y dimensions of C (step **1418**).

The current VPR-meta layer value is set to the VPR layer intersecting current cell C (step **1420**). For each VPR cell (R, *θ*) intersecting C, if the maximum terrain level (plus a buffer zone) is equal to or greater than the min VPR layer, that VPR cell is marked blocked (step **1422**).

The process then determines if there is another partition Z-layer above the one with the intersection (step **1424**). If there is another Z-layer, C is set to the cell directly above the current one (step **1426**) and the VPR layer is adjusted upward again (step **1420**). In essence, when a terrain intersection is found in a cell, process **1400** determines how high the terrain feature goes until the airspace is clear.

If there are no more space partition layers, process **1400** determines if there is another cell in the same X-row (step **1428**). If there is another cell, the value C is set for the next cell in the X-row (step **1430**), and the VPR ranges that intersect that cell are again determined (step **1418**).

If there are no more cells in the X-row, process **1400** determines if there is another row in that Z-layer (step **1432**). If there are no more rows, the process ends.

If there is another row, the current row value is set to the next row (step **1434**), and this next row is checked for a possible terrain intersection (step **1436**). If there is no terrain intersection in the row, the process ends.

If there is a possible terrain intersection in the next row, process **1400** returns to step **1414** and sets the current cell C to the cell intersection the min X-extent and determines if there is a terrain intersection with that cell. Process **1400** continues until no terrain intersections are found in the specified look-ahead region.

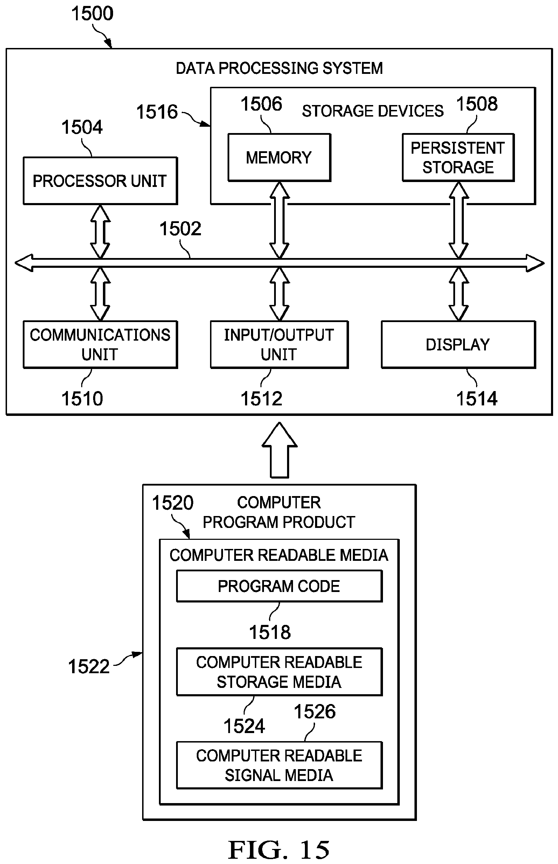

Turning now to **Figure 15****,** an illustration of a data processing system is depicted in accordance with an illustrative embodiment. Data processing system **1500** in **Figure 15** is an example of a data processing system that may be used to implement the illustrative embodiments, such as computer **104** of **Figure 1****,** or any other module or system or process disclosed herein. In this illustrative example, data processing system **1500** includes communications fabric **1502,** which provides communications between processor unit **1504,** memory **1506,** persistent storage **1508,** communications unit **1510,** input/output (I/O) unit **1512,** and display **1514.**

Processor unit **1504** serves to execute instructions for software that may be loaded into memory **1506.** Processor unit **1504** may be a number of processors, a multi-processor core, or some other type of processor, depending on the particular implementation. A number, as used herein with reference to an item, means one or more items. Further, processor unit **1504** may be implemented using a number of heterogeneous processor systems in which a main processor is present with secondary processors on a single chip. As another illustrative example, processor unit **1504** may be a symmetric multi-processor system containing multiple processors of the same type.

Memory **1506** and persistent storage **1508** are examples of storage devices **1516.** A storage device is any piece of hardware that is capable of storing information, such as, for example, without limitation, data, program code in functional form, and/or other suitable information either on a temporary basis and/or a permanent basis. Storage devices **1516** may also be referred to as computer readable storage devices in these examples. Memory **1506,** in these examples, may be, for example, a random access memory or any other suitable volatile or non-volatile storage device. Persistent storage **1508** may take various forms, depending on the particular implementation.

For example, persistent storage **1508** may contain one or more components or devices. For example, persistent storage **1508** may be a hard drive, a flash memory, a rewritable optical disk, a rewritable magnetic tape, or some combination of the above. The media used by persistent storage **1508** also may be removable. For example, a removable hard drive may be used for persistent storage **1508.**

Communications unit **1510,** in these examples, provides for communications with other data processing systems or devices. In these examples, communications unit **1510** is a network interface card. Communications unit **1510** may provide communications through the use of either or both physical and wireless communications links.

Input/output (I/O) unit **1512** allows for input and output of data with other devices that may be connected to data processing system **1500.** For example, input/output (I/O) unit **1512** may provide a connection for user input through a keyboard, a mouse, and/or some other suitable input device. Further, input/output (I/O) unit **1512** may send output to a printer. Display **1514** provides a mechanism to display information to a user.

Instructions for the operating system, applications, and/or programs may be located in storage devices **1516,** which are in communication with processor unit **1504** through communications fabric **1502.** In these illustrative examples, the instructions are in a functional form on persistent storage **1508.** These instructions may be loaded into memory **1506** for execution by processor unit **1504.** The processes of the different embodiments may be performed by processor unit **1504** using computer implemented instructions, which may be located in a memory, such as memory **1506.**

These instructions are referred to as program code, computer usable program code, or computer readable program code that may be read and executed by a processor in processor unit **1504.** The program code in the different embodiments may be embodied on different physical or computer readable storage media, such as memory **1506** or persistent storage **1508.**

Program code **1518** is located in a functional form on computer readable media **1520** that is selectively removable and may be loaded onto or transferred to data processing system **1500** for execution by processor unit **1504.** Program code **1518** and computer readable media **1520** form computer program product **1522** in these examples. In one example, computer readable media **1520** may be computer readable storage media **1524** or computer readable signal media **1526.** Computer readable storage media **1524** may include, for example, an optical or magnetic disk that is inserted or placed into a drive or other device that is part of persistent storage **1508** for transfer onto a storage device, such as a hard drive, that is part of persistent storage **1508.** Computer readable storage media **1524** also may take the form of a persistent storage, such as a hard drive, a thumb drive, or a flash memory, that is connected to data processing system **1500.** In some instances, computer readable storage media **1524** may not be removable from data processing system **1500.**

Alternatively, program code **1518** may be transferred to data processing system **1500** using computer readable signal media **1526.** Computer readable signal media **1526** may be, for example, a propagated data signal containing program code **1518.** For example, computer readable signal media **1526** may be an electromagnetic signal, an optical signal, and/or any other suitable type of signal. These signals may be transmitted over communications links, such as wireless communications links, optical fiber cable, coaxial cable, a wire, and/or any other suitable type of communications link. In other words, the communications link and/or the connection may be physical or wireless in the illustrative examples.

In some illustrative embodiments, program code **1518** may be downloaded over a network to persistent storage **1508** from another device or data processing system through computer readable signal media **1526** for use within data processing system **1500.** For instance, program code stored in a computer readable storage medium in a server data processing system may be downloaded over a network from the server to data processing system **1500.** The data processing system providing program code **1518** may be a server computer, a client computer, or some other device capable of storing and transmitting program code **1518.**

The different components illustrated for data processing system **1500** are not meant to provide architectural limitations to the manner in which different embodiments may be implemented. The different illustrative embodiments may be implemented in a data processing system including components in addition to or in place of those illustrated for data processing system **1500.** Other components shown in **Figure 15** can be varied from the illustrative examples shown. The different embodiments may be implemented using any hardware device or system capable of running program code. As one example, the data processing system may include organic components integrated with inorganic components and/or may be comprised entirely of organic components excluding a human being. For example, a storage device may be comprised of an organic semiconductor.

In another illustrative example, processor unit **1504** may take the form of a hardware unit that has circuits that are manufactured or configured for a particular use. This type of hardware may perform operations without needing program code to be loaded into a memory from a storage device to be configured to perform the operations.

For example, when processor unit **1504** takes the form of a hardware unit, processor unit **1504** may be a circuit system, an application specific integrated circuit (ASIC), a programmable logic device, or some other suitable type of hardware configured to perform a number of operations. With a programmable logic device, the device is configured to perform the number of operations. The device may be reconfigured at a later time or may be permanently configured to perform the number of operations. Examples of programmable logic devices include, for example, a programmable logic array, programmable array logic, a field programmable logic array, a field programmable gate array, and other suitable hardware devices. With this type of implementation, program code **1518** may be omitted because the processes for the different embodiments are implemented in a hardware unit.

In still another illustrative example, processor unit **1504** may be implemented using a combination of processors found in computers and hardware units. Processor unit **1504** may have a number of hardware units and a number of processors that are configured to run program code **1518.** With this depicted example, some of the processes may be implemented in the number of hardware units, while other processes may be implemented in the number of processors.

As another example, a storage device in data processing system **1500** is any hardware apparatus that may store data. Memory **1505,** persistent storage **1508,** and computer readable media **1520** are examples of storage devices in a tangible form.

In another example, a bus system may be used to implement communications fabric **1502** and may be comprised of one or more buses, such as a system bus or an input/output bus. Of course, the bus system may be implemented using any suitable type of architecture that provides for a transfer of data between different components or devices attached to the bus system. Additionally, a communications unit may include one or more devices used to transmit and receive data, such as a modem or a network adapter. Further, a memory may be, for example, memory **1505,** or a cache, such as found in an interface and memory controller hub that may be present in communications fabric **1502.**

Data processing system **1500** may also include associative memory **1528.** Associative memory **1528** may be in communication with communications fabric **1502.** Associative memory **1528** may also be in communication with, or in some illustrative embodiments, be considered part of storage devices **1516.** While one associative memory **1528** is shown, additional associative memories may be present.

The different illustrative embodiments can take the form of an entirely hardware embodiment, an entirely software embodiment, or an embodiment containing both hardware and software elements. Some embodiments are implemented in software, which includes but is not limited to forms, such as, for example, firmware, resident software, and microcode.

Furthermore, the different embodiments can take the form of a computer program product accessible from a computer usable or computer readable medium providing program code for use by or in connection with a computer or any device or system that executes instructions. For the purposes of this disclosure, a computer usable or computer readable medium can generally be any tangible apparatus that can contain, store, communicate, propagate, or transport the program for use by or in connection with the instruction execution system, apparatus, or device.

The computer usable or computer readable medium can be, for example, without limitation an electronic, magnetic, optical, electromagnetic, infrared, or semiconductor system, or a propagation medium. Non-limiting examples of a computer readable medium include a semiconductor or solid state memory, magnetic tape, a removable computer diskette, a random access memory (RAM), a read-only memory (ROM), a rigid magnetic disk, and an optical disk. Optical disks may include compact disk - read only memory (CD-ROM), compact disk - read/write (CD-R/W), and DVD.

Further, a computer usable or computer readable medium may contain or store a computer readable or usable program code such that when the computer readable or usable program code is executed on a computer, the execution of this computer readable or usable program code causes the computer to transmit another computer readable or usable program code over a communications link. This communications link may use a medium that is, for example without limitation, physical or wireless.

A data processing system suitable for storing and/or executing computer readable or computer usable program code will include one or more processors coupled directly or indirectly to memory elements through a communications fabric, such as a system bus. The memory elements may include local memory employed during actual execution of the program code, bulk storage, and cache memories which provide temporary storage of at least some computer readable or computer usable program code to reduce the number of times code may be retrieved from bulk storage during execution of the code.

Input/output or I/O devices can be coupled to the system either directly or through intervening I/O controllers. These devices may include, for example, without limitation, keyboards, touch screen displays, and pointing devices. Different communications adapters may also be coupled to the system to enable the data processing system to become coupled to other data processing systems or remote printers or storage devices through intervening private or public networks. Non-limiting examples of modems and network adapters are just a few of the currently available types of communications adapters.

As used herein, the phrase "a number" means one or more. The phrase "at least one of', when used with a list of items, means different combinations of one or more of the listed items may be used, and only one of each item in the list may be needed. In other words, "at least one of' means any combination of items and number of items may be used from the list, but not all of the items in the list are required. The item may be a particular object, a thing, or a category.

For example, without limitation, "at least one of item A, item B, or item C" may include item A, item A and item B, or item C. This example also may include item A, item B, and item

C or item B and item C. Of course, any combinations of these items may be present. In some illustrative examples, "at least one of' may be, for example, without limitation, two of item A; one of item B; and ten of item C; four of item B and seven of item C; or other suitable combinations.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent at least one of a module, a segment, a function, or a portion of an operation or step. For example, one or more of the blocks may be implemented as program code.

In some alternative implementations of an illustrative embodiment, the function or functions noted in the blocks may occur out of the order noted in the figures. For example, in some cases, two blocks shown in succession may be performed substantially concurrently, or the blocks may sometimes be performed in the reverse order, depending upon the functionality involved. Also, other blocks may be added in addition to the illustrated blocks in a flowchart or block diagram.

Further, the disclosure comprises examples according to the following clauses:
Clause 1. A computer-implemented method for object avoidance, the method comprising: receiving, by a number of processors, time-referenced position and state data for vehicles, including a control vehicle, within a specified time-space zone, wherein the vehicles have initial positions within the specified time-space zone; receiving, by a number of processors, terrain and obstacle data for a spatial zone of interest, wherein a portion of the spatial zone of interest overlaps with a portion of the specified time-space zone; calculating, by a number of processors, a probabilistic trajectory window for each vehicle within the specified time-space zone; calculating, by a number of processors, spatial buffer zones around terrain and obstacles in the spatial zone of interest according to terrain and obstacle data uncertainty and resolution; calculating, by a number of processors, a number of homotopically distinct paths for the control vehicle from a time-referenced initial position to a destination point, wherein the paths keep the control vehicle at least a minimum specified distance from the trajectory windows of other vehicles and the buffer zones of terrain and obstacles; and routing the control vehicle, by a number of processors, according to one of the paths.
Clause 2. The method of Clause 1, wherein the homotopically distinct paths are calculated according to maneuver capabilities and constraints of the control vehicle.
Clause 3. The method of Clause 1 or 2, further comprising: calculating, by a number of processors, a number of new homotopically distinct paths in response to either changes in position and state data of other vehicles or changes in terrain and obstacle data; and rerouting, by a number of processors, the control vehicle along one of the new paths.
Clause 4. The method of any one of Clauses 1 to 3, wherein the terrain and obstacle data are represented in a triangulated format.
Clause 5. The method of Clause 4, wherein the terrain and obstacle data comprise elevation data at regularly-spaced grid points.
Clause 6. The method of any one of Clauses 1 to 5, further comprising displaying the homotopically distinct paths on a four-dimensional virtual predictive radar (4D-VPR).
Clause 7. The method of Clause 6, wherein the 4D-VPR indicates intersections of vehicles, terrain, and obstacles on time rings.
Clause 8. The method of any one of Clauses 1 to 7, further comprising: generating, by a number of processors, a space partition; and mapping, by a number of processors, a maneuver manifold for the control vehicle into the space partition.
Clause 9. The method of Clause 8, further comprising decimating or refining, by a number of processors, terrain and obstacle data resolution to match maneuver manifold resolution.
Clause 10. The method of any one of Clauses 1 to 9, wherein the terrain and obstacle data are provided by at least one of a database onboard the control vehicle or an offboard server.
Clause 11. An object avoidance system comprising: a control vehicle; a computer connected to the control vehicle, the computer comprising: a bus system; a storage device connected to the bus system, wherein the storage device stores program instructions; and a number of processors connected to the bus system, wherein the number of processors execute the program instructions to perform the method of any one of Clauses 1 to 10.
Clause 12. An object avoidance system comprising: a control vehicle; a computer connected to the control vehicle, the computer comprising: a bus system; a storage device connected to the bus system, wherein the storage device stores program instructions; and a number of processors connected to the bus system, wherein the number of processors execute the program instructions to: receive time-referenced position and state data for vehicles, including the control vehicle, within a specified time-space zone, wherein the vehicles have initial positions within the specified time-space zone; receive terrain and obstacle data for a spatial zone of interest, wherein a portion of the spatial zone of interest overlaps with a portion of the specified time-space zone; calculate a probabilistic trajectory window for each vehicle within the specified time-space zone; calculate spatial buffer zones around terrain and obstacles in the spatial zone of interest according to terrain and obstacle data uncertainty and resolution; calculate a number of homotopically distinct paths for the control vehicle from a time-referenced initial position to a destination point, wherein the paths keep the control vehicle at least a minimum specified distance from the trajectory windows of other vehicles and the buffer zones of terrain and obstacles; and route the control vehicle according to one of the paths.
Clause 13. The object avoidance system of Clause 12, wherein the homotopically distinct paths are calculated according to maneuver capabilities and constraints of the control vehicle.
Clause 14. The object avoidance system of Clause 12 or 13, wherein the processors further execute program instructions to: calculate a number of new homotopically distinct paths in response to either changes in position and state data of other vehicles or changes in terrain and obstacle data; and reroute the control vehicle along one of the new paths.
Clause 15. The object avoidance system of any one of Clauses 12 to 13, wherein the terrain and obstacle data are represented in a triangulated format.
Clause 16. The object avoidance system of Clause 15, wherein the terrain and obstacle data comprise elevation data at regularly-spaced grid points.
Clause 17. The object avoidance system of any one of Clauses 12 to 16, further comprising a display system configured to display the homotopically distinct paths on a four-dimensional virtual predictive radar (4D-VPR).
Clause 18. The object avoidance system of Clause 17, wherein the 4D-VPR indicates intersections of vehicles, terrain, and obstacles on time rings.
Clause 19. The object avoidance system of any one of Clauses 12 to 18, wherein the processors further execute program instructions to: generate a space partition; and map a maneuver manifold for the control vehicle into the space partition.
Clause 20. The object avoidance system of Clause 19, wherein the processors further execute program instructions to decimate or refine terrain and obstacle data resolution to match maneuver manifold resolution.
Clause 21. The object avoidance system of any one of Clauses 12 to 20, further comprises at least one of an onboard terrain and obstacle database or an offboard server in communication with the processors.
Clause 22. A computer program product for object avoidance, the computer program product comprising: a non-volatile computer readable storage medium having program instructions embodied therewith, the program instructions executable by a number of processors to cause the computer to perform the steps of the method of any one of Clauses 1 to 10.
Clause 23. A computer program product for object avoidance, the computer program product comprising: a non-volatile computer readable storage medium having program instructions embodied therewith, the program instructions executable by a number of processors to cause the computer to perform the steps of: receiving time-referenced position and state data for vehicles, including a control vehicle, within a specified time-space zone, wherein the vehicles have initial positions within the specified time-space zone; receiving terrain and obstacle data for a spatial zone of interest, wherein a portion of the spatial zone of interest overlaps with a portion of the specified time-space zone; calculating a probabilistic trajectory window for each vehicle within the specified time-space zone; calculating spatial buffer zones around terrain and obstacles in the spatial zone of interest according to terrain and obstacle data uncertainty and resolution; calculating a number of homotopically distinct paths for the control vehicle from a time-referenced initial position to a destination point, wherein the paths keep the control vehicle at least a minimum specified distance from the trajectory windows of other vehicles and the buffer zones of terrain and obstacles; and routing the control vehicle according to one of the paths.
Clause 24. The computer program product of Clause 23, wherein the homotopically distinct paths are calculated according to maneuver capabilities and constraints of the control vehicle.
Clause 25. The computer program product of Clause 23 or 24, wherein the processors further perform the steps of: calculating a number of new homotopically distinct paths in response to either changes in position and state data of other vehicles or changes in terrain and obstacle data; and rerouting the control vehicle along one of the new paths.
Clause 26. The computer program product of any one of Clauses 23 to 25, wherein the terrain and obstacle data are represented in a triangulated format.
Clause 27. The computer program product of Clause 26, wherein the terrain and obstacle data comprise elevation data at regularly-spaced grid points.
Clause 28. The computer program product of any one of Clauses 23 to 27 wherein the processors further perform the steps of displaying the homotopically distinct paths on a four-dimensional virtual predictive radar (4D-VPR).
Clause 29. The computer program product of Clause 28, wherein the 4D-VPR indicates intersections of vehicles, terrain, and obstacles on time rings.
Clause 30. The computer program product of any one of Clauses 23 to 29, wherein the processors further perform the steps of: generating a space partition; and mapping a maneuver manifold for the control vehicle into the space partition.
Clause 31. The computer program product of any one of Clauses 23 to 30 wherein the processors further perform the steps of decimating or refining terrain and obstacle data resolution to match maneuver manifold resolution.
Clause 32. The computer program product of any one of Clauses 23 to 31, wherein the terrain and obstacle data are provided by at least one of a database onboard the control vehicles or an offboard server.

The description of the different illustrative embodiments has been presented for purposes of illustration and description, and is not intended to be exhaustive or limited to the embodiments in the form disclosed. Many modifications and variations will be apparent to those of ordinary skill in the art. Further, different illustrative embodiments may provide different features as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A computer-implemented method for object avoidance, the method comprising:
receiving, by a number of processors, time-referenced position and state data for vehicles (402), including a control vehicle (102), within a specified time-space zone (520), wherein the vehicles have initial positions (406) within the specified time-space zone;
receiving, by a number of processors, terrain and obstacle data for a spatial zone of interest (510), wherein a portion of the spatial zone of interest overlaps with a portion of the specified time-space zone (520);
calculating, by a number of processors, a probabilistic trajectory window (206) for each vehicle within the specified time-space zone;
calculating, by a number of processors, spatial buffer zones (T4) around terrain and obstacles in the spatial zone of interest (510) according to terrain and obstacle data uncertainty and resolution;
calculating, by a number of processors, a number of homotopically distinct paths (1014, 1016) for the control vehicle from a time-referenced initial position (1020) to a destination point (1022), wherein the paths keep the control vehicle at least a minimum specified distance from the trajectory windows of other vehicles and the buffer zones of terrain and obstacles; and
routing the control vehicle, by a number of processors, according to one of the paths.

2. The method of claim 1, wherein the homotopically distinct paths (1014, 1016) are calculated according to maneuver capabilities and constraints of the control vehicle.

3. The method of claim 1 or 2, further comprising:
calculating, by a number of processors, a number of new homotopically distinct paths in response to either changes in position and state data of other vehicles or changes in terrain and obstacle data; and
rerouting, by a number of processors, the control vehicle along one of the new paths.

4. The method of any one of claims 1 to 3, wherein the terrain and obstacle data are represented in a triangulated format (600).

5. The method of claim 4, wherein the terrain and obstacle data comprise elevation data (608) at regularly-spaced grid points (604, 606).

6. The method of any one of claims 1 to 5, further comprising displaying the homotopically distinct paths on a four-dimensional virtual predictive radar (4D-VPR) (1000).

7. The method of claim 6, wherein the 4D-VPR indicates intersections of vehicles, terrain, and obstacles on time rings (934).

8. The method of any one of claims 1 to 7, further comprising:
generating, by a number of processors, a space partition (432); and
mapping, by a number of processors, a maneuver manifold (126) for the control vehicle into the space partition.

9. The method of claim 8, further comprising decimating or refining, by a number of processors, terrain and obstacle data resolution to match maneuver manifold resolution.

10. The method of any one of claims 1 to 9, wherein the terrain and obstacle data are provided by at least one of a database onboard the control vehicle or an offboard server (410).

11. An object avoidance system (416) comprising:
a control vehicle (102);
a computer (1500) connected to the control vehicle, the computer comprising:
a bus system (1502);
a storage device (1516) connected to the bus system, wherein the storage device stores program instructions (1518); and
a number of processors (1504) connected to the bus system, wherein the number of processors execute the program instructions to perform the method of any one of claims 1 to 10.

12. The object avoidance system of claim 11, further comprising a display system configured to display the homotopically distinct paths on a four-dimensional virtual predictive radar (4D-VPR) (1000).

13. The object avoidance system of claim 12, wherein the 4D-VPR indicates intersections of vehicles, terrain, and obstacles on time rings.

14. The object avoidance system of claim 11, further comprises at least one of an onboard terrain and obstacle database or an offboard server in communication with the processors.

15. A computer program product for object avoidance, the computer program product comprising:
a non-volatile computer readable storage medium (1520) having program instructions (1518) embodied therewith, the program instructions executable by a number of processors (1504) to cause the computer to perform the steps of the method of any one of claims 1 to 10.
